# EUROPEAN PATENT APPLICATION

(11) **EP 1 555 826 A1**
(43) Date of publication of application: **20.07.2005**
(21) Application number: 05000252.6
(22) Date of filing: 07.01.2005
(51) Int. Cl.: H04N 7/24, H04N 7/52

(54) **Apparatus and method for inserting and extracting value added data in a transport stream-based MPEG-2 system**

(30) Priority: 17.01.2004 KR 2004003598
(71) Applicant: Samsung Electronics Co., Ltd., Suwon-si, Gyeonggi-do 442-742 (KR)
(72) Inventor: Yoo, Hoon, Yeongtong-gu Suwon-si Gyeonggi-do (KR)
(74) Representative: Grünecker, Kinkeldey, Stockmair & Schwanhäusser Anwaltssozietät

(57) **Abstract**

An apparatus and method for inserting and extracting value added data in a TS (Transport Stream)-based MPEG-2 system is provided to improve the efficiency of the TS-based MPEG-2 system. A transport packet of a transport stream for transmission is checked to determine if it includes a stuffing byte field, on the basis of a header of the transport packet. If the transport packet includes a stuffing byte field, the value added data is inserted into the stuffing byte field, and the resulting transport packet is outputted. On the other hand, a transport packet of a received transport stream is checked to determine if it includes a stuffing byte field, on the basis of a header of the transport packet. If the transport packet includes a stuffing byte field, the value added data inserted in the stuffing byte field is extracted from the transport packet.

## Description

The present invention relates to an MPEG-2 (Moving Picture Expert Group-2) system, and a TS (Transport Stream)-based MPEG-2 system.

The MPEG-2 system is used to multiplex video, audio, text data, and the like while synchronizing them to store, transmit or broadcast them. The MPEG-2 system employs two formats: Program Stream (PS) and Transport Stream (TS).

In an MPEG-2 system based on the Transport Stream format, transport streams are produced in the following manner. After being subjected to pre-processing, audio, video and text-based data information are each encoded and converted to bit streams called Elementary Streams (ESs). The ESs of each of the audio, video and text data are converted to packets for discrimination of compression units. The converted packets are called Packetized Elementary Stream (PES) packets. Each PES packet is composed of a header and a payload. The header provides information that a compression unit has started, and also includes information regarding the payload. An audio PES stream, a video PES stream and a data PES stream, are each being composed of PES packets, are multiplexed in a TDM (Time Division Multiplexing) scheme, so that they are converted to a transport stream.

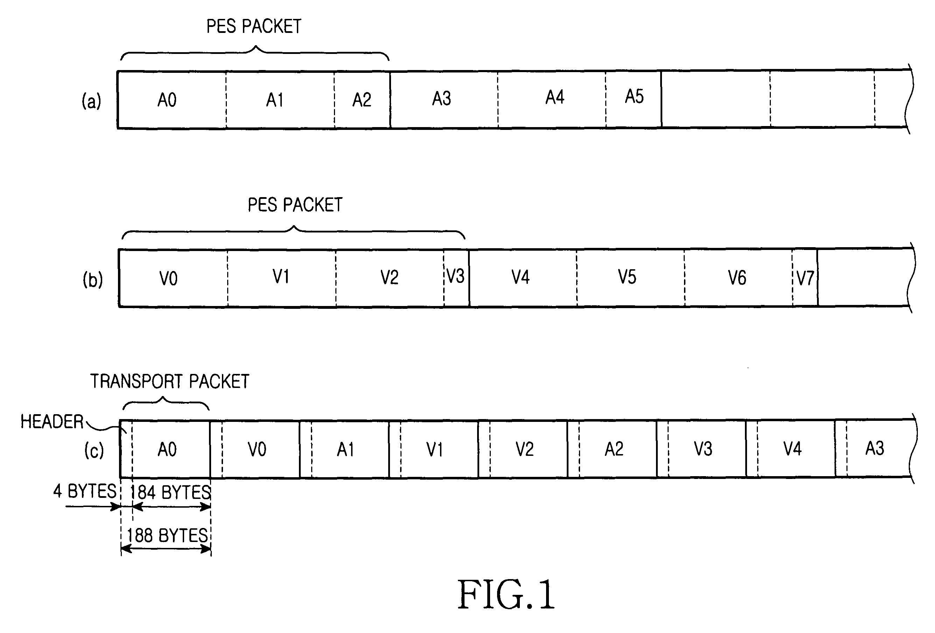

An example of the generation of a transport stream by multiplexing an audio PES stream and a video PES stream will now be described with reference to Figs. 1a to 1c. A TS-based MPEG-2 system divides and cuts an audio PES stream shown in Fig. 1a into units of 184 bytes, while it divides and cuts a video PES stream as shown in Fig. 1b into units of 184 bytes. A 4-byte header is added to each 184 byte units to produce 188-byte transport packets. The transport packets are combined together in order to produce a Transport Stream (TS) as shown in Fig. 1c. Fig 1a shows an example of an audio PES stream, in which each of the PES packets constituting the audio PES stream is divided into two 184-byte units (A0 and A1) or (A3 and A4) and remaining data less than 184 bytes (A2 or A5). Fig. 1b shows an example of a video PES stream, in which each of the PES packets constituting the video PES stream is divided into three 184-byte units (V0, V1 and V2) or (V4, V5 and V6) and remaining data less than 184 bytes (V3 or V7). Fig. 1c shows a transport stream produced by multiplexing audio data A0, A1, A2..., divided as shown in Fig. 1a, and video data V0, V1, V2, ..., divided as shown in Fig. 1b, after adding a header, discussed above, to each of the data A0, A1, A2... and V0, V1, V2, ...

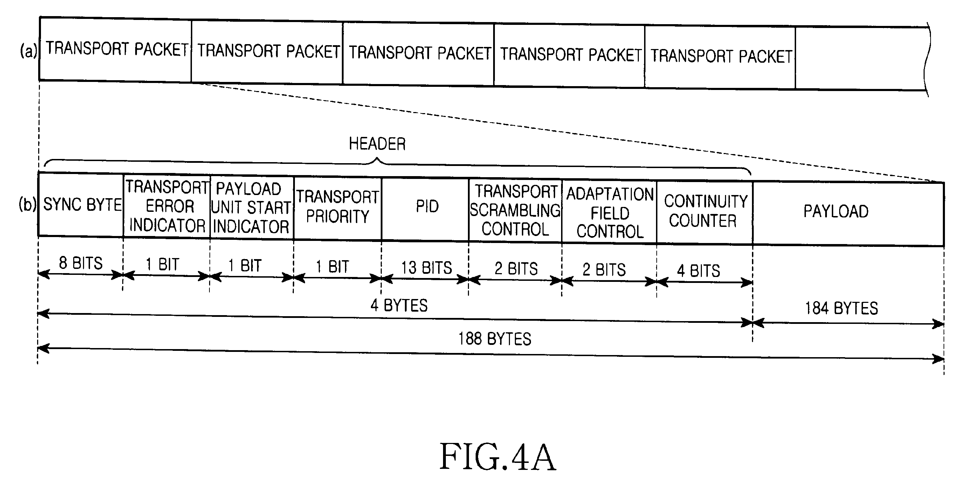

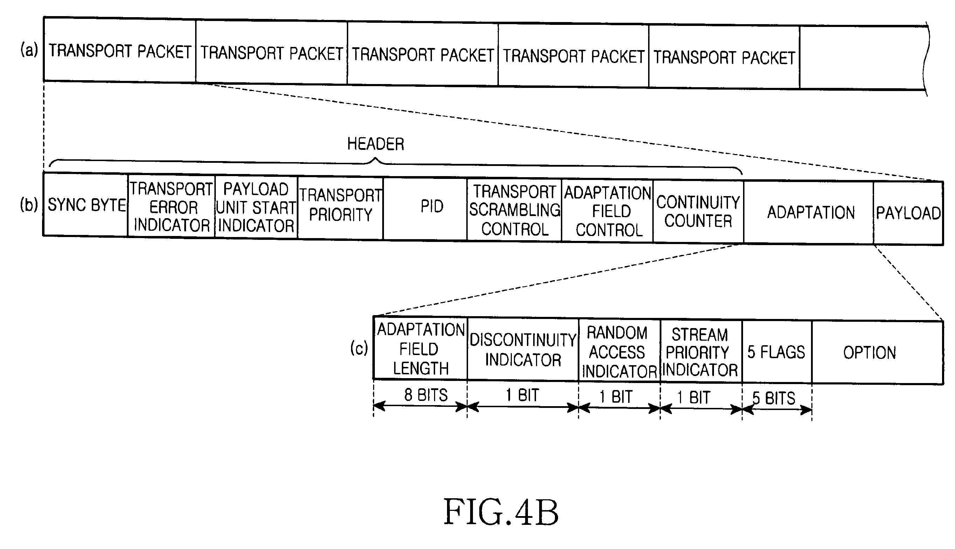

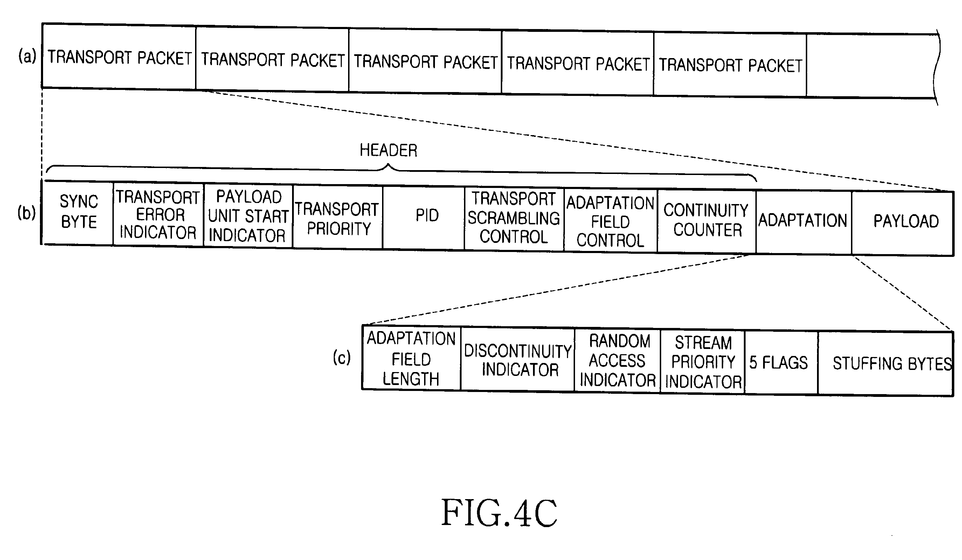

In the transport stream shown in Fig. 1c, 4-byte headers, 184-byte payloads, and 188 bytes combining both, are fixed in size. In other words, although sometimes the header of a transport packet may be elongated so that even a payload thereof may be used for the header, the size of the transport packet must be 188 bytes in all cases.

When PES streams shown in Figs. 1a and 1b are divided into 184-byte units to produce a transport stream shown in Fig. 1c, data that is less than 184 bytes may be left at the end of a PES packet. Also in this case, the size of data inserted into one transport packet must be adjusted to 184 bytes. For this reason, sufficient null data called "stuffing bytes" is inserted into a short transport packet to adjust the size of such packet to 184 bytes. The transport stream formed of continuous, fixed-size (188-byte) transport packets is stored in a recording medium, or transmitted over a communication network, or is broadcast over a broadcasting network, according to available applications of the MPEG-2 system.

When PES streams are divided into 184-byte units to produce a transport stream in the TS-based MPEG-2 system as described above, a transport packet corresponding to the end of each PES packet may include up to 183 bytes of stuffing bytes. The video PES packets are far larger in size than audio PES packets, they rarely cause a transport packet with stuffing bytes. However, the audio PES packets may frequently cause a transport packet with stuffing bytes since they are small in size.

For example, in the total streams of a current Japanese satellite DMB (Digital Multimedia Broadcasting) system, audio packets are approximately 10 percent, whereas video packets are about 85 percent. One audio packet includes 20 stuffing bytes approximately every 3 audio packets, whereas one video packet includes 90 stuffing bytes every about 15 video packets.

Since the satellite DMB system has a bit rate of 512 Kbits/sec, the number of packets transmitted per second is about 340 (= 512,000 bits % 8 bits (the number of bits of one byte) % 188 bytes (the number of bytes of one transport packet)), where "%" denotes a modulo operator. Thus, the audio packets, accounting for about 10 percent of the total streams, are transmitted at a rate of 34 (= 340 x 0.1) packets per second, whereas the video packets, accounting for about 85 percent of the total stream, are transmitted at a rate of 290 (= 340 x 0.85) packets per second. Since one audio packet includes 20 stuffing bytes approximately every 3 audio packets, about 11 audio packets from among the 34 audio packets that are transmitted per second carry stuffing bytes of about 1760 bits (= 11 packets x 20 bytes x 8 bits). On the other hand, since one video packet includes 90 stuffing bytes approximately every 15 video packets, about 15 video packets from among 290 video packets that are transmitted per second carry stuffing bytes of about 10,800 bits (= 15 packets x 90 bytes x 8 bits).

It can be seen from the above description that, in the DMB system, the audio and video packets are used at rates of 1.76 kbps and 10.8 kbps, respectively, to transmit the invalid stuffing bytes.

Although it is currently used in various fields, the TS-based MPEG-2 system is inefficient due to the stuffing bytes that are inserted into transport packets only to adjust the packets into a fixed size.

Therefore, the present invention has been made in view of the above problem, and it is the object of the present invention to provide an apparatus and method for inserting and extracting value added data, whereby the efficiency of a TS (Transport Stream)-based MPEG-2 system can be improved.

This object is solved by the subject matter of the independent claims.

Preferred embodiments are defined by the dependent claims.

The present invention provides an apparatus and method for inserting and extracting value added data, whereby value added data can be transmitted using a TS-based MPEG-2 system.

According to the present invention, it is determined whether a transport packet of a transport stream for transmission includes a stuffing byte field, on the basis of a header of the transport packet. If the transport packet includes a stuffing byte field, the value added data is inserted into the stuffing byte field, and the resulting transport packet is outputted. Furthermore, it is determined whether a transport packet of a received transport stream includes a stuffing byte field, on the basis of a header of the transport packet. If the transport packet includes a stuffing byte field, the value added data inserted in the stuffing byte field is extracted from the transport packet.

The above and other features and other advantages of the present invention will be more clearly understood from the following detailed description taken in conjunction with the accompanying drawings, in which:
Figs. 1a to 1c is a data structure diagram of audio and video streams used for the generation of an MPEG-2 transport stream;
Fig. 2 is a schematic block diagram showing an MPEG-2 transmission system that includes an apparatus for inserting value added data according to an embodiment of the present invention;
Fig. 3 is a flow chart showing an operation for inserting value added data according to one embodiment of the present invention;
Figs. 4a to 4c are data structure diagrams of an MPEG-2 transport packet;
Fig. 5 is a flow chart showing an operation for inserting value added data according to another embodiment of the present invention;
Fig. 6 is a schematic block diagram showing an MPEG-2 receiving system that includes an apparatus for extracting value added data according to an embodiment of the present invention; and
Fig. 7 is a flow chart showing an operation for extracting value added data according to an embodiment of the present invention.

Now, preferred embodiments of the present invention will be described in detail with reference to the annexed drawings. In the following description of the present invention, a detailed description of known functions and configurations incorporated herein will be omitted when it may make the subject matter of the present invention unclear.

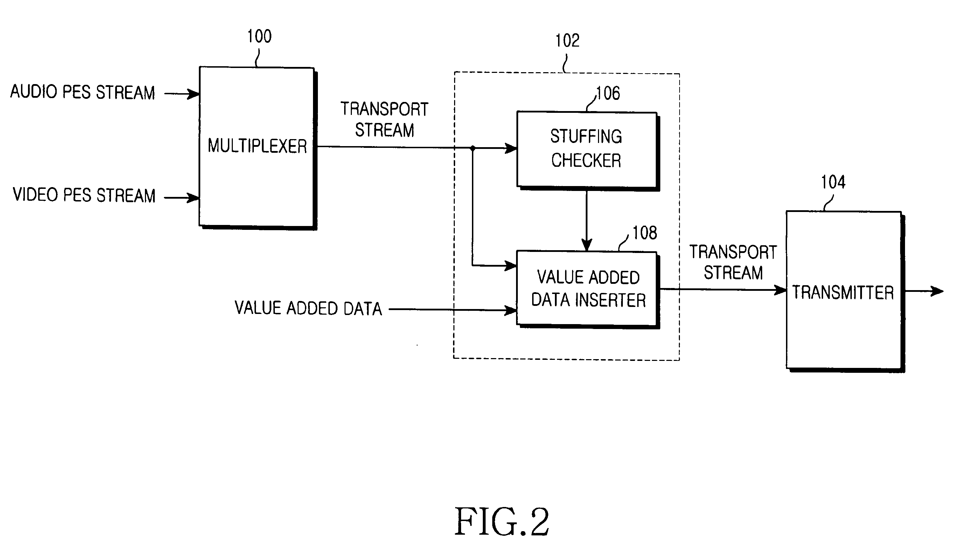

Fig. 2 is a schematic block diagram showing an MPEG-2 transmission system that includes an apparatus 102 for inserting value added data into a transmission stream according to an embodiment of the present invention. This figure shows an example in which an audio PES and a video PES streams are multiplexed to produce a transport stream, and the produced transport stream is then transmitted. A multiplexer 100 multiplexes an audio PES and a video PES streams to produce a transport stream shown in Figs. 1a to 1c. Before a transmitter 104 transmits the produced transport stream, it is inputted to the value added data insertion apparatus 102 according to the embodiment of the present invention. The value added data insertion apparatus 102 includes a stuffing checker 106 and a value added data inserter 108. The stuffing checker 106 receives a transport stream to be transmitted, and checks based on a header of the transport packet, whether a transport packet in the received transport stream has a stuffing byte field. If the result is that the transport packet includes a stuffing byte field, the value added data inserter 108 inserts value added data into the stuffing byte field of the transport packet and outputs the transport packet.

When the present invention is applied, for example, to a digital broadcasting system, the value added data may include data of various supplementary broadcasts such as closed captioning, disaster information, breaking news, text data, an image or logo of a broadcast provider. On the other hand, if the result of the check by the stuffing checker 106 is that the transport packet includes no stuffing byte field, the value added data inserter 108 allows the transport packet to pass through the inserter 108 without alteration. After the transport packet has passed through the inserter 108 without alteration, or the value added data has been inserted into the transport packet at the inserter 108, the transmitter 104 transmits the transport stream including the transport packet outputted from the inserter 108. The transport stream is then stored in a recording medium or transmitted over a communication network, or broadcasted over a broadcasting network, according to applications of an MPEG-2 system to which the embodiment of the present invention is applied.

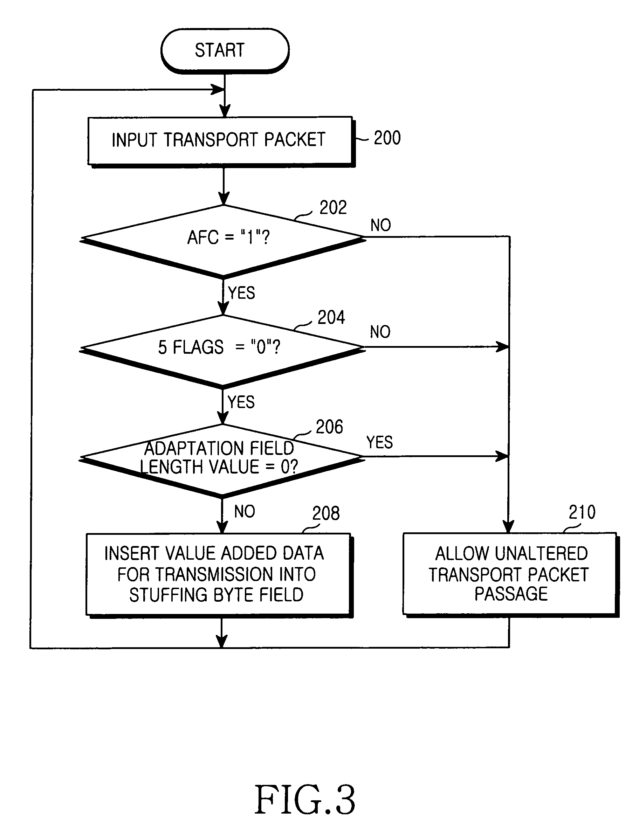

Fig. 3 is a flow chart showing the procedure of steps 200 to 210 that the value added data insertion apparatus 102 performs to insert value added data. As shown, in step 200 the stuffing checker 106 receives a transport packet of a transport stream outputted from the multiplexer 100. Then, in steps 202 to 206, the stuffing checker 106 checks whether the received transport packet includes a stuffing byte field, preferably on the basis of a header of the transport packet.

For a better understanding of the procedure for checking, based on the header of the transport packet, whether the transport packet includes a stuffing byte field. A description will now be given of the data structure of a transport packet defined in the MPEG-2 standard with reference to Figs. 4a to 4c. As shown in Fig. 4a, each of the transport packets constituting a transport stream (denoted by letter "(a)") includes a 4-byte header and a 184-byte payload subsequent to the 4-byte header (denoted by "(b)"), and thus has a size of 188 bytes. As shown in part b of Fig. 4a, the header includes an 8-bit sync byte field, a 1-bit transport error indicator field, a 1-bit payload unit start indicator field, a 1-bit transport priority field, a 13-bit Packet Identification (PID) field, a 2-bit transport scrambling control field, a 2-bit Adaptation Field Control (AFC) field, and a 4-bit continuity counter field. Such a structure of the header is well known in the art and thus a more detailed description thereof will be omitted.

In the header configured as described above, the Adaptation Field Control (AFC) field is used to check whether a corresponding transport packet includes a stuffing byte field, according to the embodiment of the present invention. According to the MPEG-2 standard, the AFC field indicates whether the header is followed by an adaptation field and/or payload. If the AFC has a value of "0", it indicates that there is no adaptation field following the header, i.e., the header is followed by only the payload. On the other hand, if the AFC has a value of "1", it indicates that the header is followed by an adaptation field, as shown in Figs. 4b or 4c. In the case where there is an adaptation field following the header, the adaptation field may have an option field as shown in part c of Fig. 4b, or may have no option field as shown in part c of Fig. 4c.

By checking five one-bit flags in the adaptation field, it is possible to determine whether the adaptation field has an option field as shown in part c of Fig. 4b, or the adaptation field has no option field as shown in part c of Fig. 4c. At least one of the 5 flags being set to "1", indicates that the adaptation field has an option field shown in part c of Fig. 4b. The option field is used as an extension of the header. Such an adaptation field including an option field appears at a transport packet corresponding to the first 184 bytes A0 or V0 of the audio or video PES packets as shown in Figs. 1a and 1b. Therefore, a transport packet, which has at least one of the five flags set to "1", is highly likely to include no stuffing byte field, and even if the transport packet includes a stuffing byte field, the stuffing byte field will be small in size. For this reason, according to the present invention, a transport packet, which has at least one of the five flags set to "1", is regarded as having no stuffing byte.

Even if all of the 5 flags of a transport packet are set to "0", the transport packet may have no stuffing byte although it is likely to have a stuffing byte as shown in part c of Fig. 4c. A transport packet including no stuffing byte while all the 5 flags thereof are set to "0", indicates that the entire field subsequent to an adaptation field of the transport packet is used as a payload, i.e., the entire subsequent field will be filled with audio or video data. On the other hand, a transport packet including a stuffing byte while all the 5 flags thereof are set to "0", indicates that the entire field subsequent to an adaptation field of the transport packet is inserted with audio or video data less than 184 bytes, as "A2" and "A5" in Fig. 1a or "V3" or "V7" in Fig. 1b. By checking the value of an adaptation field length field at the head of an adaptation field as shown in part c of Fig. 4c, it is possible to determine whether the adaptation field includes a stuffing byte. The value of the adaptation field length field indicates the length of a remaining portion of the adaptation field other than the adaptation field length field, i.e., the length of a discontinuity indicator field to the end of the adaptation field. Therefore, the adaptation field length value of "0", indicates that the adaptation field includes no stuffing byte. On the other hand, the adaptation field length value of non-zero (i. e., more than zero), indicates that the adaptation field includes stuffing bytes of a size corresponding to a value of the adaptation field length value minus "8 bits". The "8 bits" are the sum of the respective sizes of information fields (i.e., a 1-bit discontinuity indicator field, a 1-bit random access indicator field, a 1-bit stream priority indicator field, and 5 one-bit flags) in the adaptation field as shown in part c of Fig. 4b.

As described above, it is possible to determine whether a transport packet includes a stuffing byte, based on the value of an Adaptation Field Control (AFC) field, 5 flags, an adaptation field length value or the like, and it is also possible to determine the starting position and the size of stuffing bytes when the transport packet includes the stuffing bytes.

Accordingly, returning to Fig. 3 at the above step 202, the stuffing checker 106 checks whether the value of an AFC field in the header of the transport packet is "1". If the value of the AFC field is "0", it indicates that there is no adaptation field subsequent to the header, so that the transport packet includes no stuffing byte field. In this case, the value added data inserter 108 performs step 210.

If step 202 determines that the value of the AFC field is "1", step 204 then checks whether all the flags of a corresponding adaptation field are set to "0". If all the flags are not set to "0", it indicates that although the transport packet has an adaptation field, the adaptation field does not include a stuffing byte field but includes an option field. In this case, the value added data inserter 108 performs step 210.

If step 204 determines that all the 5 flags are set to "0", step 206 checks whether the adaptation field length value is "0". If the adaptation field length value is "0", it indicates that there is no stuffing byte field as described above. In this case, the value added data inserter 108 performs step 210.

If step 206 determines that the adaptation field length value is not "0", it indicates that there is a stuffing byte field as described above. In this case, the value added data inserter 108 performs step 208. At step 208, the value added data inserter 108 inserts value added data for transmission through a corresponding transport stream into the stuffing byte field, and then outputs the resulting transport stream to the transmitter 104. Here, the value added data inserter 108 inserts value added data, which has a size obtained based on the adaptation field length value, into the stuffing byte field subsequent to the 5 flags.

On the other hand, if the transport packet includes no stuffing byte field, the value added data inserter 108 allows the transport packet to pass through the inserter 108 without alteration, and outputs the transport packet to the transmitter 104.

As described above, if a transport packet in a transport stream includes stuffing bytes, the transport stream is transmitted after value added data, instead of the stuffing bytes, is inserted into the transport packet. Accordingly, a wasted field for stuffing bytes can be used for the value added data, thereby improving the efficiency of a TS-based MPEG-2 system By applying the present invention to a digital broadcasting system, it is possible to provide various additional broadcasts such as closed captioning, disaster information, breaking news, text data, an image or logo of a broadcast provider. In particular, the present invention is very effective for use in the disaster information broadcast that must transfer information urgently, immediately and simultaneously, since the present invention can be applied to any broadcast channel.

As stuffing bytes are transmitted at constant rates of 1.76 kbps for audio packets and 10.8 kbps for video packets in the DMB broadcasting system described above, the transfer rate of stuffing bytes is constant in an MPEG-2 based system. For this reason, if the present invention is applied, the transfer bit rate of value added data also becomes constant. The present invention thus can implement various additional functions using the value added data as the additional broadcasts.

In addition, since value added data is uniformly inserted into the audio data field or video data field while guaranteeing a constant bit rate, it is possible to synchronize value added data transmissions between a transmitter and a receiver, without setting an additional time stamp.

On the other hand, it is also possible to determine whether a transport packet in a transport stream includes a stuffing byte field, not based on the transport packet's header as shown in Fig. 3, but by searching for a data pattern used for stuffing bytes in the transport packet. This idea comes from the fact that a data pattern used for stuffing bytes has a specific format different from data patterns of other information included in the transport packet, as the satellite DMB system uses a data pattern "0xFF" for stuffing bytes.

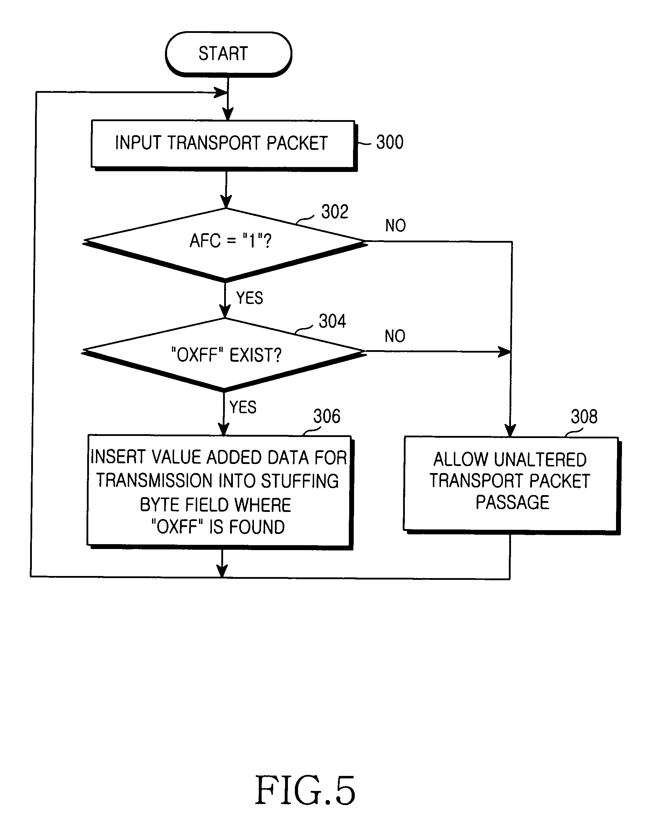

Fig. 5 is a flow chart showing an example of the procedure of steps 300 to 308 that the value added data insertion apparatus 102 performs to insert value added data into a stuffing byte field that is found by searching for a data pattern used for stuffing bytes in a transport packet when the present invention is applied to the satellite DMB system. At step 300, a stuffing checker 106 receives a transport packet of a transport stream outputted from the multiplexer 100, and checks whether the received transport packet includes a stuffing byte field in steps 302 and 304,.

At step 302, the stuffing checker 106 checks whether the value of an AFC field in a header of the transport packet is "1". The AFC value of "0", indicates that the transport packet includes no adaptation field subsequent to the header of the transport packet as described above, and thus the transport packet has no stuffing byte field. In this case, since there is no need to search for a data pattern "0xFF", the value added data inserter 108 performs step 308.

If step 302 determines that the AFC value is "1", the stuffing checker 106 searches for a data pattern "0xFF" in the transport packet at step 304. If stuffing bytes exist in the transport packet, they will be located at a rear portion of the transport packet as shown in part c of Fig. 4c. For this reason it is preferable to search for the data pattern "0xFF" in the transport packet, starting from the end thereof. If the data pattern "0xFF" is not found at step 304, it indicates that the transport packet includes no stuffing byte field, the value added data inserter 108 performs step 310.

If the data pattern "0xFF" is found at step 304, the value added data inserter 108 performs step 306. At step 306, the value added data inserter 108 inserts value added data to be transmitted through a corresponding transport stream into a stuffing byte field where the data pattern "0xFF" is found, and outputs the resulting transport stream to the transmitter 104. In this step, it is preferable that the value added data inserter 108 insert value added data of a size corresponding to all areas whose data patterns are found to be "0xFF" into all the areas.

As described above, if the transport packet includes no stuffing byte field, the value added data inserter 108 allows the transport packet to pass through the inserter 108 without alteration, and outputs it to the transmitter 104 in the same manner as the above step 210.

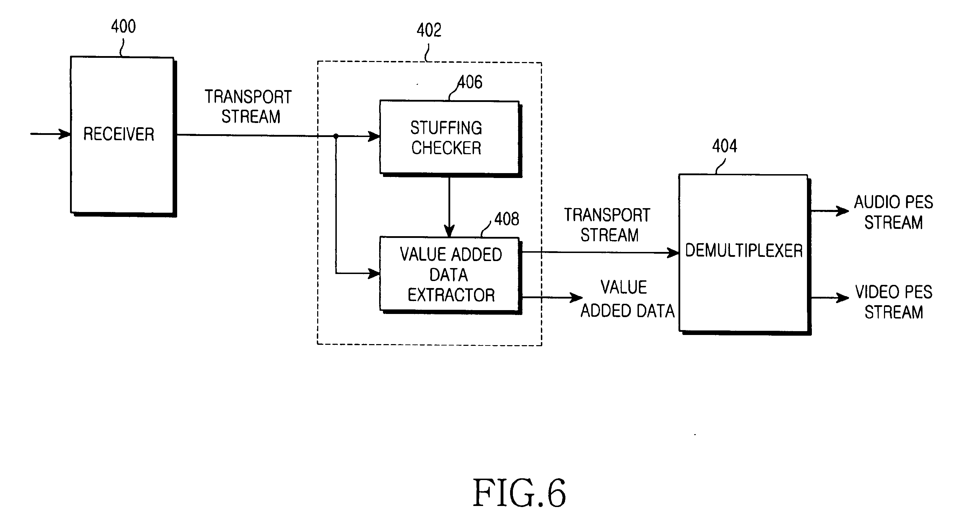

Fig. 6 is a schematic block diagram showing an MPEG-2 receiving system for receiving value added data transmitted while being included in a transport stream, which includes an apparatus 402 for extracting value added data according to an embodiment of the present invention. This figure shows an example in which the MPEG-2 receiving system receives a transport stream produced by multiplexing audio and video PES streams. After being stored in a recording medium, or transmitted over a communication network, or broadcasted over a broadcasting network, the transport stream transmitted from the transmitter 104 of Fig. 2 is received by a receiver 400. The received transport stream is inputted to the value added data extraction apparatus 402 according to the embodiment of the present invention before being demultiplexed by a demultiplexer 404. The value added data extraction apparatus 402 includes a stuffing checker 406 and a value added data extractor 408. The stuffing checker 406 receives the transport stream through an input thereof and checks whether a transport packet of the transport stream includes a stuffing byte field, on the basis of a header of the transport packet, in the same manner as the stuffing checker 106 of Fig. 2. If the stuffing checker 406 determines that the transport packet includes a stuffing byte field, the value added data extractor 408 extracts value added data, inserted in the stuffing byte field of the transport packet, from the transport packet, and then outputs it to the demultiplexer 404. On the other hand, if the stuffing checker 406 determines that the transport packet includes no stuffing byte field, the value added data extractor 408 allows the transport packet to pass through the valve added data extractor without alteration and then outputs it to the demultiplexer 404.

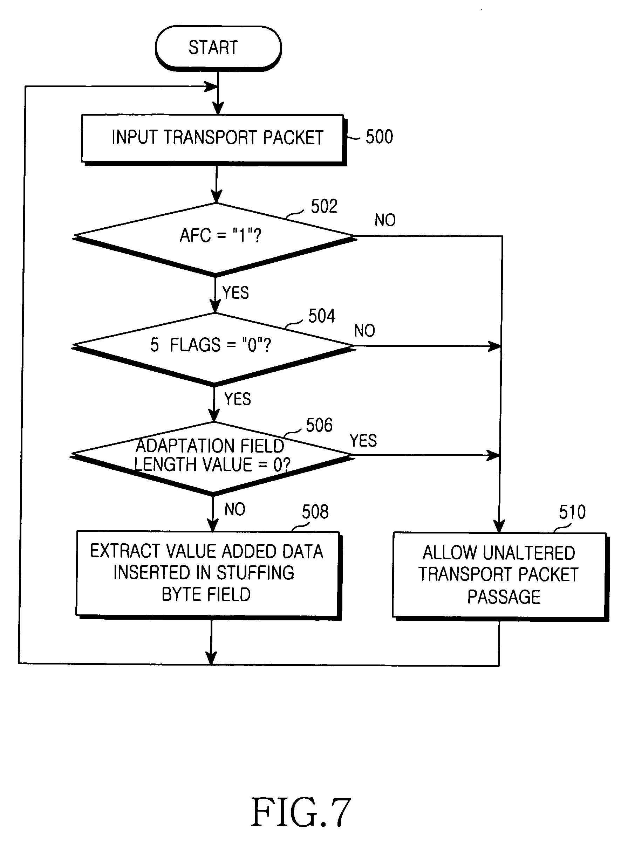

Fig. 7 is a flow chart showing the procedure of steps 500 to 510 that the value added data extraction apparatus 402 performs to extract value added data. At step 500, the stuffing checker 406 receives a transport packet of a transport stream from the receiver 400. At steps 502 to 506, the stuffing checker 406 determines whether the transport packet includes a stuffing byte field, in the same manner as the above steps 202 to 206 of Fig. 3. If the received transport packet includes a stuffing byte field, then at step 508, the value added data extractor 408 extracts value added data inserted in the transport packet of the transport stream and then outputs the extracted value added data while outputting the transport packet to the demultiplexer 404. On the other hand, if the transport packet does not include stuffing byte field, the value added data extractor 408 allows the transport packet to pass through the extractor 408 without alteration and outputs it to the demultiplexer 404 at step 510. The demultiplexer 404 separates the transport stream received via the value added data extraction apparatus 402 into an audio PES stream and a video PES stream, and outputs the audio and video PES streams.

Accordingly, by extracting value added data, which was transmitted while being inserted in transport packets of a transport stream instead of stuffing bytes, from the transport packets,
the MPEG-2 receiving system can receive various additional broadcasts such as closed captioning, disaster information, breaking news, data, an image or logo of a broadcast provider.

Although the preferred embodiments of the present invention have been disclosed for illustrative purposes, those skilled in the art will appreciate that various modifications, additions and substitutions are possible, without departing from the scope of the invention. In particular, the embodiments of the present invention have been described with reference to an example where the present invention is applied to a transport stream produced by multiplexing an audio PES steam and a video PES stream. However, the present invention may also be applied to a transport stream produced by multiplexing not only the audio and video PES streams but also a data PES stream. In this case, value added data, instead of stuffing bytes, is inserted not only into audio and video fields but also into data fields, and thereafter the inserted value added data is extracted therefrom. Accordingly, the scope of the present invention should not be limited to the above embodiments, but defined by the accompanying claims as well as equivalents thereof.

## Claims

1. An apparatus for transmitting value added data through a transport stream in a TS-based MPEG-2 system, the apparatus comprising:
a stuffing checker for determining on the basis of a header of the transport packet whether a transport packet of a transport stream for transmission includes a stuffing byte field; and
a value added data inserter for
inserting value added data into a stuffing byte field if the transport packet includes the stuffing byte field, and
outputting the transport packet.

2. The apparatus according to claim 1, wherein the value added data inserter allows the transport packet to pass through the value added data inserter without alteration if the transport packet does not includes the stuffing byte field.

3. The apparatus according to claim 1 or 2, wherein the stuffing checker determines that the transport packet include the stuffing byte field if
AFC information in the header of the transport packet indicates that the transport packet includes an adaptation field, and
flags in the adaptation field indicate that the adaptation field includes no option field and an adaptation field length value in the adaptation field is larger than 0.

4. The apparatus according to claim 3, wherein the stuffing byte field is an area subsequent to information fields of the adaptation field, said area having a size corresponding to the stuffing byte field's length.

5. An apparatus for transmitting value added data through a transport stream in a TS-based MPEG-2 system, the apparatus comprising:
a stuffing checker for determining whether a transport packet of a transport stream for transmission includes a stuffing byte field, by searching for a data pattern used for stuffing bytes in the transport packet; and
a value added data inserter for inserting value added data into a stuffing byte field if the transport packet includes the stuffing byte field and outputting the transport packet.

6. The apparatus according to claim 5, wherein the stuffing byte field is an area where the data pattern for stuffing bytes is found.

7. An apparatus for receiving value added data transmitted while being included in a transport stream in a TS-based MPEG-2 system, the apparatus comprising:
a stuffing checker for determining on the basis of a header of the transport packet whether a transport packet of a received transport stream includes a stuffing byte field; and
a value added data extractor for extracting value added data inserted in the stuffing byte field if the transport packet includes the stuffing byte field.

8. The apparatus according to claim 7, wherein the stuffing checker determines that the transport packet includes the stuffing byte field if
AFC information in the header of the transport packet indicates that the transport packet includes an adaptation field, and
flags in the adaptation field indicate that the adaptation field includes no option field and an adaptation field length value in the adaptation field is larger than 0.

9. The apparatus according to claim 8, wherein the stuffing byte field is an area subsequent to information fields of the adaptation field, said area having a size corresponding to the stuffing byte field's length.

10. A method for transmitting value added data through a transport stream in a TS-based MPEG-2 system, the method comprising the steps of:
a) determining on the basis of a header of the transport packet whether a transport packet of a transport stream for transmission includes a stuffing byte field; and
b) inserting value added data into a stuffing byte field if the transport packet includes the stuffing byte field and outputting the transport packet.

11. The method according to claim 10, wherein said step b) includes the step of allowing passage of the transport packet without alteration if the transport packet does not include the stuffing byte field.

12. The method according to claim 10 or 11, wherein said step a) includes the steps of
a-1) determining on the basis of AFC information in the header of the transport packet whether the transport packet includes an adaptation field,;
a-2) if the transport packet includes the adaptation field, determining
on the basis of flags in the adaptation field whether the adaptation field includes an option field,;
a-3) determining an adaptation field length value in the adaptation field, if the adaptation field does not include the option field;
a-4) determining that the transport packet includes the stuffing byte field, if the adaptation field length value is larger than 0; and
a-5) determining that the transport packet does not include the stuffing byte field, if the transport packet does not include the adaptation field or if the adaptation field does not include the option field, or if the adaptation field length value is 0.

13. The method according to claim 12, wherein the stuffing byte field is an area subsequent to information fields of the adaptation field, said area having a size corresponding to the stuffing byte field's length.

14. A method for transmitting value added data through a transport stream in a TS-based MPEG-2 system, the method comprising the steps of:
a) determining whether a transport packet of a transport stream for transmission includes a stuffing byte field by searching for a data pattern used for stuffing bytes in the transport packet; and
b) inserting value added data into a stuffing byte field if the transport packet includes the stuffing byte field and outputting the transport packet.

15. The method according to claim 14, wherein said step a) includes the steps of
a-1) searching for a data pattern used for stuffing bytes in the transport packet;
a-2) determining that the transport packet includes the stuffing byte field, if the data pattern used for the stuffing bytes is found; and
a-3) determining that the transport packet does not include the stuffing byte field, if the data pattern used for the stuffing bytes is not found.

16. The method according to claim 15, wherein the stuffing byte field is an area where the data pattern for stuffing bytes is found.

17. A method for receiving value added data transmitted while being included in a transport stream in a TS-based MPEG-2 system, the method comprising the steps of
a) determining on the basis of a header of the transport packet whether a transport packet of a received transport stream includes a stuffing byte field; and
b) extracting value added data inserted in the stuffing byte field if the transport packet includes the stuffing byte field.

18. The method according to claim 17, wherein said step a) includes the steps of
a-1) determining on the basis of AFC information in the header of the transport packet whether the transport packet includes an adaptation field;
a-2) determining whether the adaptation field includes an option field, on the basis of flags in the adaptation field, if the transport packet includes the adaptation field;
a-3) determining an adaptation field length value in the adaptation field, if the adaptation field does not include the option field;
a-4) determining that the transport packet includes the stuffing byte field, if the adaptation field length value is larger than 0; and
a-5) determining that the transport packet does not include the stuffing byte field, if the transport packet does not include the adaptation field or if the adaptation field does not include the option field, or if the adaptation field length value is 0.

19. The method according to claim 18, wherein the stuffing byte field is an area subsequent to information fields of the adaptation field, said area having a size corresponding to the stuffing byte field's length
